# EUROPEAN PATENT APPLICATION

(11) **EP 1 388 398 A1**
(43) Date of publication of application: **11.02.2004**
(21) Application number: 02017900.8
(22) Date of filing: 07.08.2002
(51) Int. Cl.: B26F 1/00

(54) **Perforated roller cover and methods of manufacture thereof**

(71) Applicant: NEWELL OPERATING COMPANY, Freeport Illinois 61032 (US)
(72) Inventor: Johnston, Michael R., Wooster, Ohio 44691 (US); Bower, Lawrence J., Jr., Milwaukee, Wisconsin 53207 (US); Serio, Craig S., New Berlin, Wisconsin 53151 (US)
(74) Representative: Winkler, Andreas, Dr.

(57) **Abstract**

The invention discloses a method of manufacturing a perforated roller cover (10) and includes placing a roller cover (10) having a core portion (14) and an application medium (16) on a support member (20), positioning a perforating station (22) having a perforating device near the support member (20), exposing the core portion (14), moving the perforating device from a non-piercing position to pierce the core (14) in a first location and a second location and removing the roller cover (10) from the support member (20).

The invention also discloses an apparatus (12) for piercing roller covers (10) having an application medium (16) adhered to a core (14) and includes at least one perforating station (22) having at least one piercing device, at least one application medium separation device (36) and a heat source (38), a mandrel (20) having a plurality of openings (24) to support the roller cover (10), and an actuator to move the perforating station between a piercing position and a non-piercing position.

## Description

### CROSS REFERENCE TO RELATED APPLICATIONS

The present application claims the priority of co-pending U.S. Provisional Patent Application Serial No. 60/278,973 titled "Perforated Roller Cover and Methods of Manufacture Thereof filed March 27, 2001, the full disclosure of which is hereby incorporated by reference.

### FIELD OF THE INVENTION

The present invention relates generally to accessories for applying paint and other liquid coatings to surfaces. In particular, the present invention relates to paint roller covers and methods for manufacturing such roller covers. Even more particularly, the present invention relates to perforated roller covers and methods of manufacturing such perforated roller covers.

### BACKGROUND OF THE INVENTION

Paint rollers are commonly used to apply paint or other liquid coatings to large surfaces. Typically, the roller cover comprises a tubular core formed from either a phenolic material or a plastic material to which is applied a paint applying medium. A typical paint applying medium is a fabric nap supported by a fabric backing that is adhered to the tubular core. The tubular core is removably positioned upon a paint roller which enables the paint carrying medium to be rolled along the surface being coated.

Typically, the paint applying medium of the paint roller cover is loaded with the paint or other coating by simply rolling the roller cover in a tray filled with the paint or coating. In an effort to eliminate the need to repeatedly load the cover with paint by rolling the roller in a paint tray, paint applying devices continually supply the paint or other liquid coating to the paint applying medium developed. In such devices, the paint is continuously supplied to the interior of the paint roller cover.
The paint roller cover is provided with a plurality of perforations or openings which extend through the tubular core and through the backing. As a result, the liquid coating passes through such perforations or openings onto the paint applying medium. As a result, such devices eliminate the need to repeatedly reload the paint roller with paint by dipping the paint roller in a paint tray. An example of such a device is U.S. Patent No. 4,583,876.

In contrast to conventional paint roller covers, the paint roller covers utilized in such automatic paint roller feeding systems must be perforated. The perforation of such roller covers is typically performed by a punch press having a plurality of sharpened points which are simply forced inward, through the fabric nap, through the fabric backing and through the tubular core. This process is repeated until a sufficient number of openings have been formed in the paint roller cover. Although this process is commonly used to perforate such roller covers, this process is lengthy and has several disadvantages. In particular, this process requires that the punch be repeatedly extended and retracted into and out of engagement with the roller cover to form the required number of perforations. Because the points of the punch simply puncture the fabric backing and the core, the material extruded from the perforation remains on the interior of the tubular core. This extruded material inhibits removal of the completed roller cover from the mandrel supporting the roller cover during the process and inhibits the insertion of the roller cover upon the paint roller support by the end user. As a result, if a higher quality product is desired, an additional finishing process must be performed to remove the extruded material from the inner circumferential surface of the tubular core. This increases both the time and cost for manufacturing such perforated roller covers.

Thus, there is a continuing need for a method for perforating roller covers which can be inexpensively and quickly completed and which results in a perforated roller cover having clean perforations and having a smooth interior surface.

### SUMMARY OF THE INVENTION

The invention relates to a method of manufacturing a perforated roller cover and includes placing a roller cover having a core portion and an application medium on a support member, positioning at least one perforating station proximate to the support member, the perforating station having at least one perforating device, exposing the core portion, moving the perforating device from a non-piercing position to a piercing position and back to the non-piercing position to pierce the core in a first location and in a second location, and removing the roller cover from the support member.

The invention also relates to an apparatus for piercing roller covers having an application medium adhered to a core and includes at least one perforating station having at least one piercing device, at least one application medium separation device and a heat source, a mandrel having a plurality of openings and adapted to support the roller cover, and an actuator adapted to move the perforating station between a piercing position and a non-piercing position.

The invention further relates to a perforating apparatus for roller covers and includes a support sleeve adapted to hold the roller cover, a perforating station having at least one piercing device adapted to selectively engage the roller cover, an actuator operable to move the piercing device between a first position and a second position to pierce the roller cover in a first location, where the actuator is further operable to move the perforating station for piercing the roller cover in a second location.

The invention further relates to an apparatus for perforating roller covers having a cylindrical core and an application medium coupled thereto provided. The apparatus includes at least one piercing device disposed within the interior of the cylindrical core. The at least one piercing device is configured to perforate the core.

The invention further relates to a method for continuously forming a plurality of paint roller covers having a first commercially acceptable length disclosed. The method includes continuously forming a roller cover stock having a second axial length greater than the first commercially acceptable axial length. The stock includes a core portion and an application medium coupled to the core portion. The method further includes perforating the core stock and dividing the perforated core stock into a plurality of roller covers having the first commercially acceptable axial length.

### BRIEF DESCRIPTION OF THE DRAWINGS

Figure 1 is a sectional view of an apparatus in a preparation mode for perforating a roller cover according to a preferred embodiment.

Figure 2 is a sectional view of an apparatus in a perforation mode for perforating a roller cover according to a preferred embodiment.

Figure 3 is an elevation view of a perforation station according to a preferred embodiment.

Figure 4 is a sectional view of a perforation station according to a preferred embodiment.

Figure 5 is an elevation view of a perforation pin according to a preferred embodiment.

Figure 6 is a side elevation view of an apparatus for perforating a roller cover according to an alternative embodiment.

Figure 7 is an end elevation view of an apparatus for perforating a roller cover according to an alternative embodiment.

Figure 8 is an end elevation view of a perforation device according to an alternative embodiment.

Figure 9 is an end elevation view of a perforation device according to another alternative embodiment.

Figure 10 is a front elevation view of a system for producing perforated roller covers according to a preferred embodiment.

Figure 11 is a plan view of a system for producing perforated roller covers according to a preferred embodiment.

Figure 12 is a sectional view of a roller perforating device according to an alternative embodiment.

Figure 13 is a sectional view of a roller perforating device in a perforating position according to another alternative embodiment.

### DETAILED DESCRIPTION OF THE PREFERRED EMBODIMENTS

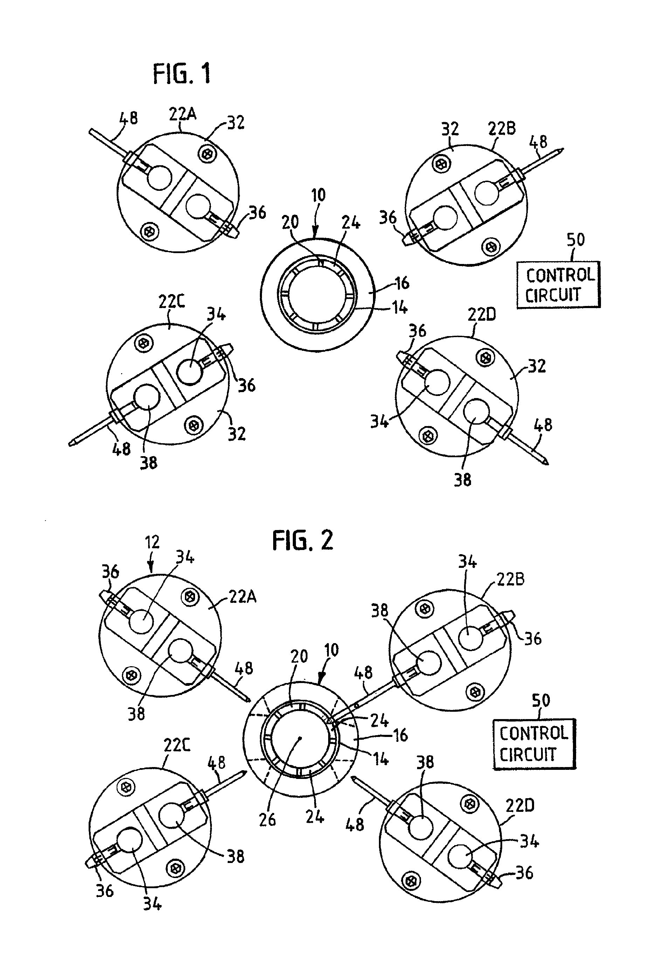

FIGURES 1-4 illustrate the first method and apparatus for perforating a roller cover. In particular, FIGURES 1-4 illustrate a roller cover 10 being perforated by apparatus 12. Roller cover 10 generally includes core 14 and paint carrying medium 16. Core 14 comprises an elongate tubular member preferably formed from one or more thermoplastic materials, but other synthetic or natural materials may also be used. Core 14 may be extruded or otherwise molded as a single unitary body or may be formed from one or more strips or plies of thermoplastic material which at least partially overlap one another or which have adjacent edges fused or otherwise adhered to one another.

Paint applying medium 16 extends about and is secured to core 14 and is formed from a material capable of carrying and releasing paint or other coatings upon a surface. In the exemplary embodiment, paint applying medium 16 comprises a fabric nap supported on a fabric backing which may have the form of a woven yarn or other fabric composition. The fabric backing is fused, bonded or adhered to core 14. In the exemplary embodiment, the fabric nap and the fabric backing include one or more thermoplastic materials such as polyester. Alternatively, paint applying medium 16 may comprise other materials as are conventionally known or which are hereafter developed for such purposes.

Overall, roller cover 10 generally comprises a roller cover having a core and a paint applying covering secured to the core. Roller cover 10, prior to perforation, may be formed by any of the processes disclosed in U.S. Patent No. 5,206,968; U.S. Patent No. 5,468,207; U.S. Patent No. 5,195,242; U.S. Patent No. 4,692,975; pending U.S. Application Serial No. 09/788,915 entitled "Apparatus and Method for Making Variable Paint Roller Covers", filed on February 19, 2001 by Bruce C. Polzin and Lawrence J. Bower, Jr., or pending U.S. Patent Application Serial No. 09/766,110, filed on January 19, 2001 by Bruce C. Polzin, the full disclosures of which are hereby incorporated by reference. Alternatively, roller cover 10, prior to being perforated, may be formed from various other well-known processes or processes which are hereafter developed.

As best shown by FIGURES 1-4, apparatus 12 generally includes support 20 and stations 22A, 22B, 22C, and 22D. Support 20 is generally configured to support roller cover 10. Support 20 preferably comprises a mandrel configured to be slidably received within core 14 of cover 10. Support 20 includes a plurality of radially extending slits or other shaped openings 24. Openings 24 are sized to receive perforating portions of each of stations 22. In the exemplary embodiment, support 22 is further configured to incrementally rotate roller cover 10 to position different circumferential portions of roller cover 10 opposite to stations 22. Alternatively, support 22 may be generally stationary while stations 22 are rotated about support 20. Furthermore, in particular embodiments, both support 20 and stations 22 may rotate about axis 26 depending upon the particular desired pattern of perforations to be made in roller cover 10.

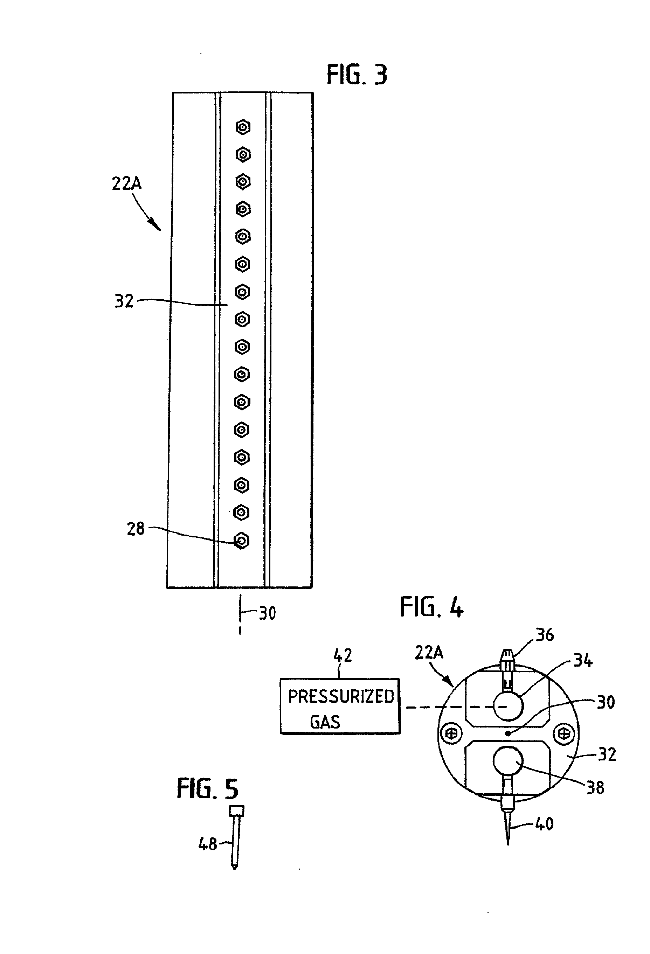

Stations 22A, 22B, 22C and 22D are each substantially identical to one another. Figures 3 and 4 illustrate station 22A in greater detail. Figure 3 is an elevation view of station 22A while Figure 4 is a sectional view of station 22A. As shown by Figure 3, each station 22A preferably includes a plurality of perforating substations 28. Perforation substations 28 are preferably arranged in a row along axis 30. Substations 28 are preferably formed as part of a single elongate structure 32 to form an elongate frame. Alternatively, substations 28 may be supported by a variety of alternative structures. In the exemplary embodiment, each station is provided with a row of 16 such substations 28, but any number of substations may be used based on the roller length and desired perforation pattern. As will be appreciated, the exact number of substations 28 may vary depending upon the desired speed of perforation operations and the number of apertures desired in the finished roller cover 10.

Figure 4 is a sectional view through an individual substation 28. As shown by Figure 4, each substation 28 generally includes conduit 34, nozzle 36, thermocouple 38 and pin 40. Conduit 34 comprises an elongate passageway through frame 32 in communication with nozzle 36 of each of substations 28. Conduit 34 is connected to a source 42 of pressurized gas such as air, as schematically illustrated. The supply of pressurized air from source 42 is controlled by means of one or more valves under the control of a control circuit (not shown). Nozzle 36 projects from conduit 34 and is configured to direct the pressurized air towards roller cover 10 (shown in Figure 1) when nozzle 36 is pointed towards roller cover 10. The air is pressurized at a sufficient pressure and nozzle 36 is preferably configured so as to spread the paint applying medium, such as the fabric nap, apart so as to expose the underlying backing. As will be appreciated, the exact amount of pressurized air and the exact configuration of nozzle 36 may vary depending upon the thickness and density of the fabric nap which must be separated.

Heat source 38 comprises a conventionally known thermocouple that may be integrated with a heating element such as those manufactured by the Watlow Electric Manufacturing Company of St. Louis, Missouri. Heat source 38 is housed within frame 32 and configured to heat pin 40 to a temperature above the melting point of the material forming the backing of paint applying medium 16 and material of core 14 (approximately 400 degrees Fahrenheit). Alternatively, various other heat sources may be employed which heat pins 40. Each heat source 38 is preferably controlled by a control circuit configured to control the temperature and time at which pin 40 is heated and may include temperature sensing from a thermocouple, an infrared pyrometer, or other temperature sensing device.

Pin 40 comprises a projection extending from frame 32 configured to pierce the backing of medium 16 and the material of core 14. Pin 40 is thermally coupled to heat source 38. As a result, as pin 40 pierces roller cover 10, pin 40 melts the material about the perforation or opening being formed. In alternative embodiments, a backing material for medium 16 may be provided having a woven stitching density sufficient to allow adequate coating delivery without further perforations, whereby core 14 may be perforated separately prior to application and bonding of medium 16 to core 14.

In the exemplary embodiment, pin 40 is stationarily supported by frame 32. Frame 32 actuates between a piercing position in which pin 40 pierces roller cover 10 and a non-piercing retracted position. Frame 32 is preferably actuated by means of one or more pneumatic cylinder assemblies which are coupled to a stationary base at one end and to frame 32 at another end. Alternatively, frame 32 may be actuated by hydraulic, electrical or mechanical means. The actuation of frame 32 between the positions is controlled by means of a control circuit. In alternative embodiments, actuators between the piercing position and the non-piercing position may be manually controlled such as by, for example, depressant of a bottom or switch to initiate the actuator. In yet another alternative embodiment, pin 40 itself moves or is actuated between an extended piercing position and a retracted non-piercing position by actuation means such as an electric, pneumatic, hydraulic or mechanical linear actuator.

Figure 5 illustrates an alternative pin 48 which may be used in lieu of pin 40. Pin 48 has a greater length enabling pin 48 to pierce a roller cover having a thicker backing or core or a roller cover having a thicker paint applying medium. Pin 48 further has the advantage of having a longer uniform shank diameter which allows for uniform perforation diameters over varying penetrations depths. As will be appreciated, the exact configuration of the pin employed to pierce roller cover 10 may be varied depending upon the size of the desired aperture and the characteristics of the roller cover being pierced. In a further alternative embodiment, pin 48 may have a sufficient length to allow penetration of both sides of roller cover 10 in a single insertion and retraction operation. This alternative provides the advantage of reducing the number of stations 22 or reducing the number of perforation operations by one-half for creating the same overall perforation pattern.

Figures 1 and 2 illustrate apparatus 12 in operation. As shown by Figure 1, unperforated roller cover 10 is initially positioned upon support 20 between stations 22. Upon initiation of apparatus 12, control circuit 50 (schematically shown) generates a control signal which causes pressure source 42 to supply pressurized air to each of nozzles 36. Nozzles 36 direct the pressurized air towards roller cover 10 so as to separate apart the paint applying medium. After a predetermined time has past or after appropriate sensors coupled to the control circuit 50 sense the separation of the paint applying medium, control circuit 50 generates a control signal which is transmitted to one or more rotary actuators (not shown) which rotate each of stations 22 approximately 180 degrees to the position shown in Figure 2.

In the position shown in Figure 2, each of pins 48 is pointed towards the gap in the paint applying medium of roller cover 10. Thereafter, the linear actuators actuate frames 32 towards roller cover 10 from a non-piercing position to a piercing position so as to cause pins 48 to pierce the backing of paint applying medium 16 and the material of core 14. After such piercing has been completed, the linear actuator moves each of stations 22 to the retracted position. Thereafter, control circuit 50 generates the control signal wherein support 20 rotates to reposition roller cover 10 relative to stations 22. At the same time, control circuit 50 generates a control signal which causes the rotary actuator to rotate each of stations 22 once again to the position shown in Figure 1 where the process is repeated until a sufficient number of rows of perforations have been formed within roller cover 10.

The relative movement of stations 22, roller cover 10, pins 48 and nozzles 36 may be achieved by in a variety of alternative arrangements. For example, in lieu of support 20 being rotated by rotary actuator to reposition core 10 relative to stations 22, stations 22 as a group may rotate about roller cover 10. In lieu of all of the paint applying material gaps being formed simultaneously followed by a simultaneously piercing by all four pins 48, such piercing and separation may be simultaneously achieved by different stations 22. In particular, stations 22A and 22B could perform the separating step while stations 22C and 22D perform the piercing step, wherein either stations 22 or support 24 are rotated so as to reposition stations 22 and support 20 relative to one another. In such an alternative application, it would not be necessary to rotate each of stations 22 nor would it be necessary to provide each of stations 22 with both a nozzle and a piercing pin. Moreover, piercing pins and nozzles 36 may be provided by separate distinct structures. As will be appreciated, the number of stations 22 may be varied depending upon the desired number of perforations in roller cover 10 and the spacings of such perforations. Although less desirable, source 42, conduit 34 and nozzle 36 may be omitted.

Apparatus 12 and its method for perforating roller cover 10 enable roller cover 10 to be quickly perforated with quality results. Because nozzles 36 separate apart adjacent the material of the paint applying medium, less material, such as fabric, is drawn into the perforated hole. In addition, less material over the overlying hole or perforation is damaged. Because pin 40 or 48 is heated to the appropriate material melting point, pin 48 does not extrude the material but melts the material as the perforation is being created. As a result, the generally smooth inner circumferential surface of core 14 of cover 10 is maintained.

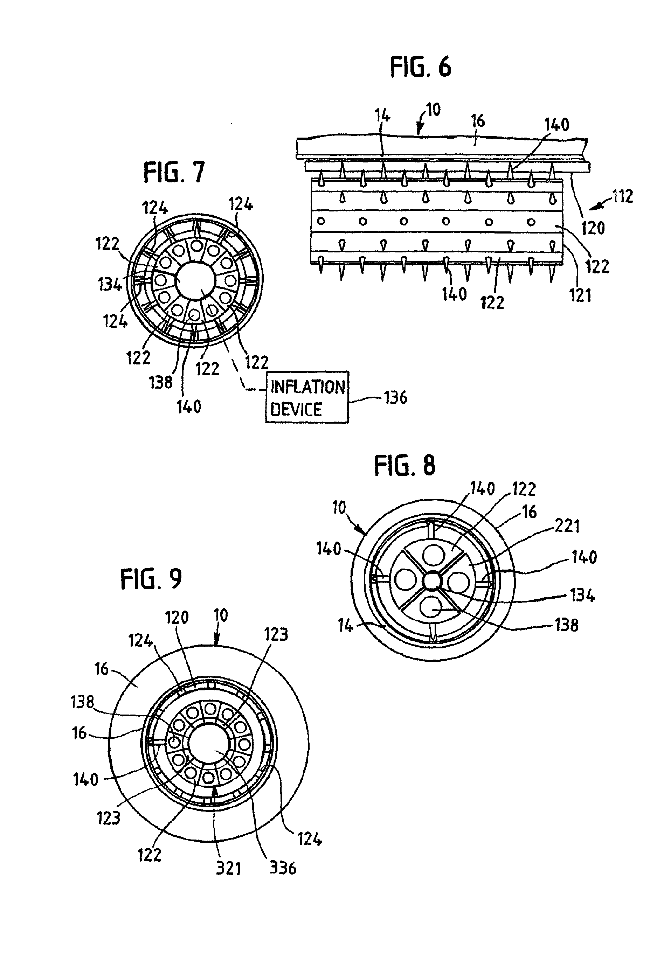

Figures 6 and 7 illustrate apparatus 112 and an alternative method for perforating roller cover 10. Figure 6 is a side elevation view of apparatus 112 perforating roller cover 10. Figure 7 is an end elevation view of apparatus 112. As shown by Figures 6 and 7, apparatus 112 generally includes support 120 and internal perforation device 121. Support 120 generally comprises a tubular support structure, such as a mandrel, configured to be received within core 14 of roller cover 10. Support 120 includes a plurality of radially extending slots 124 sized and located to receive perforating portions of device 121. Support 120 additionally includes optional cooling passageways (not shown) extending between its inner and outer circumferential surfaces along the length of support 120. The cooling passageways enable the flow of cooling fluid to cool support 120. Alternative means may also be employed to cool the exterior circumferential surface of support 120.

Segments 122 are arranged so as to cooperatively fit together in a compact arrangement as shown in Figure 7, yet are outwardly movable relative to one another between the retracted position shown in Figure 7 and an extended cover piercing position. Perforation device 121 extends within support 120 and generally includes perforating segments 122, bladder 124 and inflation device 136 (schematically shown). Each perforation segment 121 includes a heat source 138 and a pin 140. Heat source 138 preferably comprises a thermocouple thermally coupled to pin 140. Alternatively, other heating devices known or hereafter developed may be employed to heat pin 140. Pin 140 projects from the body of each segment 138 and is configured to pierce core 14 and the backing of medium 16. In the exemplary embodiment, each of pins 140 preferably comes to a distinct point. Alternatively, the end of each of pins 140 may have various other configurations.

Bladder 134 extends within the interior of segments 122 and is coupled to inflation device 136. Bladder 134 preferably comprises an inflated bladder formed from a material capable of withstanding high temperatures. In the exemplary embodiment, bladder 134 is preferably formed from a silicone material. Bladder 134 is pneumatically coupled to inflation device 136 (schematically shown). Inflation device 136 is configured to supply pressurized air to bladder 134 to selectively inflate and deflate bladder 134 in response to control signals from a control circuit (not shown). In lieu of inflation device 136 and bladder 134, various other mechanisms may be employed to selectively outwardly expand segments 122 between the retracted non-piercing position (as shown in Figure 7) and an extended piercing position in which pins 140 are forced through core 14 and the backing of medium 16 as pins 140 are at an elevated temperature preferably above the melting temperature of core 14 and the backing of medium 16.

In operation, an unperforated core 10 is positioned upon support 120. Upon actuation of the control circuit (either manually or as a result of sensors indicating the presence of cover 10), the control circuit actuates inflation device 136 and heat sources 138. Heat sources 138 heat pins 140 to an elevated temperature preferably above the melting point of the plastic material forming core 14 and the backing of medium 16. Inflation device 136 inflates bladder 134 which expands uniformly forcing segments 122 outward against the bias to pierce cover 10. Because pins 140 are heated, pins 140 more easily penetrate the material of cover 10 and melt the material about the perforations of cover 10 to produce the high quality perforation. After a predetermined time has past, inflation device 136 stops the inflation of bladder 134 and deflates bladder 134. Segments 122 return to their initial retracted position by means of a bias provided by a spring or other mechanism biasing each of segments 122 towards the retracted compact state or position. Thereafter, either or both of support 120 or internal perforation device 121 are rotated or linearly translated and the process is repeated to form additional perforations. Once a sufficient number and size of perforations is formed, core 10 is removed from support 120.

As will be appreciated, the number of pins 140 provide on each segment 122, the number of segments 122 and the size of each pin 140 may be varied depending upon the number and size of perforations desired and the characteristics of roller cover 10 being perforated. For example, Figure 8 illustrates an alternative embodiment including perforation device 221 in lieu of perforation device 121. Perforation device 221 includes four segments 122. Perforation device 221 operates in a fashion substantially identical to perforation device 121, except that perforation device 221 forms 4 rows of perforations instead of 16. With perforation device 221, one or both of support 120 or device 221 is incrementally rotated to reposition cover 10 relative to device 221. After repositioning, device 221 is once again actuated to the extended piercing position and then once again retracted. As a result, device 221 is capable of forming greater than 4 rows of perforations by means of rotating device 221 and cover 10 relative to one another. Although not illustrated, each of segments 122 may include greater than one pin 140. Moreover, the size of each of pins 140 may be varied to vary the size or perforations along roller cover 10.

Figure 9 illustrates perforation device 321 (omitting all but one pin 140 for ease of illustration). Perforation device 321 is substantially identical to perforation device 121 except that perforation device 321 includes segments 122 having beveled internal surfaces 123 and further includes an actuation device 336 comprising conical or other complementary angled internal member which acts as a cam so as to engage the beveled surfaces 123 of each of segments 122 to actuate segments 122 from the retracted position to the extended piercing position in which pins 140 pass through support 120 and pierce roller cover 10. In the exemplary embodiment, actuation of the internal angled cam surface provided by member 336 is achieved by means of a hydraulic cylinder assembly coupled to a control circuit. Alternatively, reciprocation of the cam surface of member 336 may be achieved by various other linear actuators such as electric solenoids, pneumatic cylinder piston assemblies or other mechanical actuation devices. Similar to segments 122 of piercing device 121, segments 122 of device 321 are preferably biased towards the retracted position by means of a spring or other bias mechanism. Alternatively, segments 122 may be coupled to the cam structure of member 336 such that during reverse actuation of member 336, segments 122 are moved to the retracted position. An exemplary cooperative relationship between segments 122 and member 336 would be that of an internal conical surface on the ends of segments 122 and an external conical surface on member 336, wherein insertion and removal of member 336 moves 122 inwardly and outwardly.

Similar to apparatus 12, the various embodiments of apparatus 112 pierce roller cover 10 quickly and with quality perforations. Because apparatus 112 pierces from the inside out, apparatus 112 is even less likely to undesirably force fabric into the perforations or openings. Moreover, apparatus 112 is capable of more quickly forming perforations in roller cover 10. Although apparatus 12 and 112 preferably employ heated pins 140, in alternative less desirable embodiments, apparatus 12 and 112 may employ unheated pins. Moreover, apparatus 12 and 112 may be employed to perforate roller covers having cores and backings made out of materials other than plastics or thermoplastics, including, but not limited to phenolics, vinyls, acrylics, paper, cardboard and wire mesh material. Although apparatus 12 and 112 are preferably performed on roller cover 10 at a separate station after roller cover 10 has been completed, apparatus 12 and 112 may alternatively be performed in-line immediately after roller cover 10 has been formed.

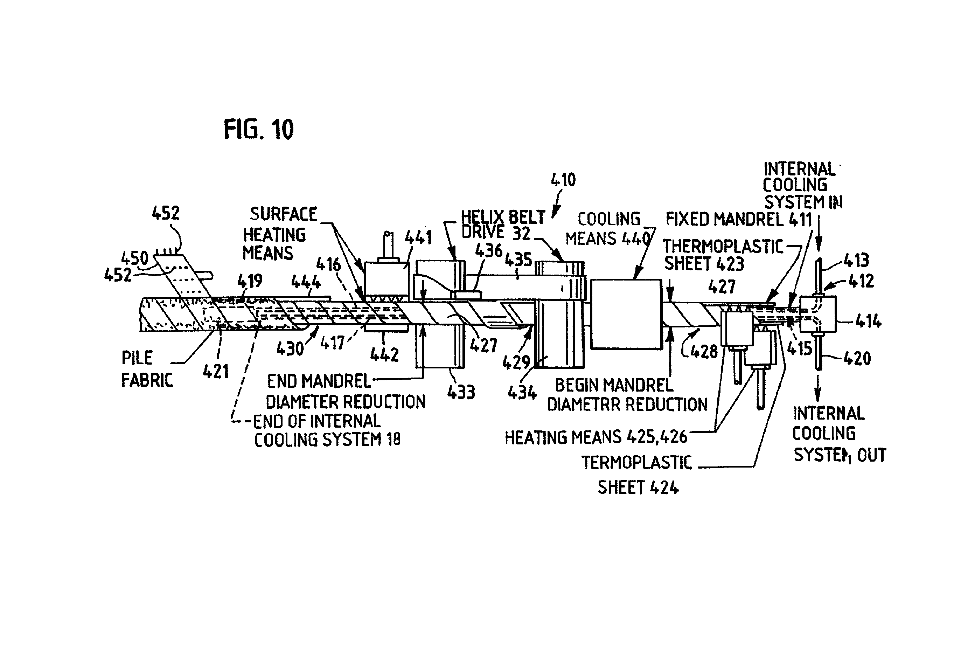

Referring first to FIG. 10, a system for continuously producing paint rollers is indicated generally at 410. The system includes a circular mandrel 411 which, in this instance, is fixed against rotation. The mandrel is solid except for an internal cooling system indicated generally at 412. The cooling system includes a cooling fluid inlet conduit 413 which connects to a header block 414 from which end the internal cooling system 415 of the mandrel extends leftwardly as viewed in FIG. 10. The internal cooling system includes an inlet line 416 and a return line 417, the end portion of the system being, indicated at 418. In this instance, the inlet line 416 and return line 417 are simply parallel passages formed within the solid mandrel 411 and connected by a bend 419 which forms in effect the end portion of the internal cooling system. The return end of return line 417 connects to the cooling system header block 414 and elevated temperature cooling fluid leaves the system through discharge or take away line 420 at the right side of FIG. 10. The end of the mandrel is indicated at 421.

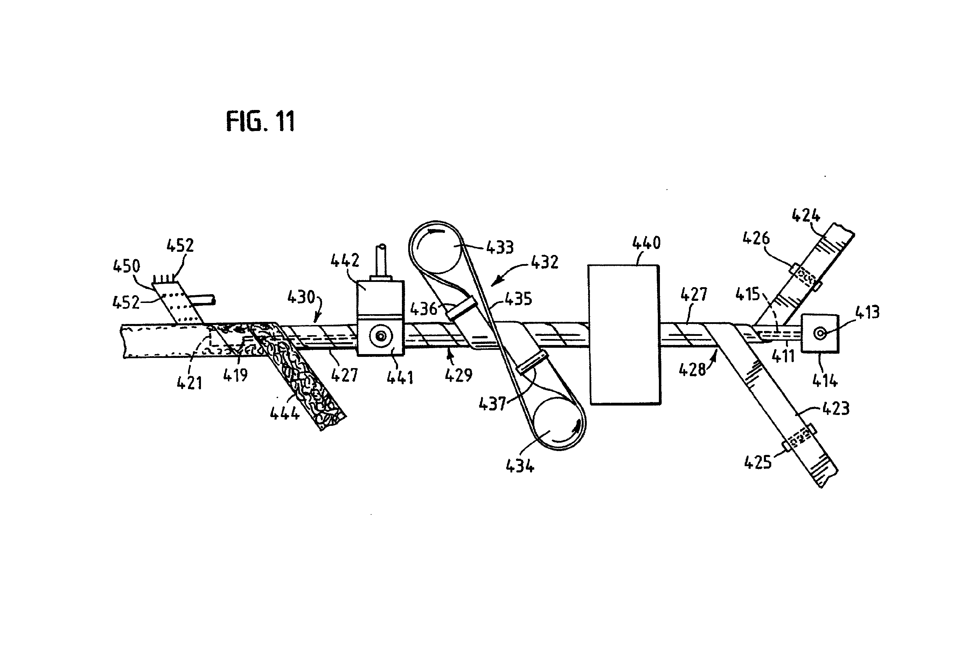

A pair of strips of thermoplastic material are indicated at 423, 424, the strips, or plies, being wrapped around mandrel 411 one above the other, all as best seen in FIG. 11. The underside of each ply is heated by heating means 425, 426 so that upon contacting engagement of the plies, the heated surfaces contact one another and bonding of one ply to another then begins. In the illustrated embodiment the plies are formed from general purpose polypropylene of approximately 0.02 inches thickness and about 2-3/4 inches width. Due to the greater internal diameter of the top ply 423, its width is preferably slightly greater than the width of the bottom ply, as for example on the order of about 1 %, although the exact amount of increased width is determined by the thickness of the plies and the angle of feed to the mandrel as well as the inherent requirements of each installation to produce a smooth surface, all of which is determinable by adjustments as will be apparent to those skilled in the art. It should be understood that though a general purpose polypropylene has been described, any suitable thermoplastic material may be used so long as it results in a strong bond, upon application of heat, with itself, and is compatible with later applied pile fabric in the sense that a firm bond may be formed between the core structure and the pile fabric backing. Alternatively, the plies may be pre-perforated in a manner such that the overlapped plies have a suitable number of aligned perforations so that a sufficient quantity of coating can be delivered through core 14 to medium 16 having a backing material with an appropriate weave density for permitting permeation of the coating.

Since the plies are composed of thermoplastic materials to which heat has been applied prior to contact with one another and with the cooled mandrel, the plies will shrink as they are cooled by the mandrel and individual wraps will fuse tightly against one another. In this instance this change in physical dimension is accommodated for by varying the size and contour of the mandrel 411. Thus, in a first section, indicated generally at 428, of the mandrel, the outside dimension of the mandrel is preferably of a constant diameter. In a second section, indicated generally at 429, the outside diameter generally tapers to a smaller diameter in the left direction, and in a third section indicated generally at 430, the diameter along this section is the smallest diameter reached at the end of the tapered section 429. Since the cooling system 412 operates continuously, the hot, dimensionally expanded plies 423, 424 will be continuously subjected to the cooling effect and thus continually contracting in physical dimension.

A helix belt drive is indicated at 432 for moving the multi-ply core structure, initially, and the composite core-fabric structure, eventually, to the left until the process of formation is complete. The belt drive may be the well known Ford drive system which includes a pair of upright cylinders 433, 434, and an endless drive belt 435, at least one of the cylinders being a drive cylinder. A pair of hold down rollers 436, 437 cause the drive belt 435 to wrap at least 360 degrees around the mandrels so that adequate frictional engagement between the drive belt and the core structure to ensure rotation of the core, and the core-fabric structure, without slippage is achieved whereby a positive, easily controllable drive action is obtained. Thus, the speed of the entire process, including pulling of the strip materials from their sources, can be controlled by controlling the belt drive system.

As the now multi-ply core structure 427 moves to the left as viewed in FIG. 10 under the driving influence of the belt drive 432, its external surface is subjected to the cooling effect of an external cooling means 440. In a preferred embodiment the specific cooling means 440 consisted of multiple water sprinklers feeding directly onto the core. The resultant rapid cooling creates a rather quick shrinkage effect thereby binding the core structure on the mandrel 411. However, the aforementioned taper in the second section 429 of the mandrel prevents the binding of the core structure to the mandrel to such a degree to interfere in operation. Cooling of the surface of the multi-ply core structure at this point also enables the belt drive to operate without overheating. The result is that a smooth surfaced, substantially stress free core structure leaves the left end 421 of the mandrel 411. As is thus apparent, adjustment and proper operation of the cooling system, within the limits of operation fixed by the degree of mandrel taper and the temperature of the core structure entering the cooling means, all influence the efficient operation of the system. In one embodiment a mandrel which was approximately 1.5 inches in outside diameter at the right end as viewed in FIG. 10 is gradually reduced in diameter by about 1% over a distance of approximately a yard.

The bonding or fusion of the pile fabric to the core structure commences after the core structure leaves the belt drive system 432. Specifically, surface heating means 441, 442 put heat into the exposed surface of the core structure just prior to application of the pile fabric to the core structure. A pair of gas ribbon burners have been used for the heating means 441, 442, the angle of the burner flames being adjusted to get optimum heating effect. The spacing of the burners from the core structure will, of course, vary, but in one embodiment a spacing of about 1/2" was found acceptable. It is not necessary or intended that burners 441, 442 heat the core blank completely through. All that is intended is that the core blank is heated to a degree sufficient to ensure good bonding with the subsequently applied fabric. In fact, through heating is undesirable.

The pile fabric is applied to the core structure in strip form as indicated at 444. Since the underside of the fabric strip is compatible with the heated exterior surface of the core structure, a bond between the fabric and core structure will form very quickly with the result that a unitary core stock structure having an axial length greater than a normal commercially acceptable length is formed. Since the bonding of the hot core structure to the room temperature fabric strip consumes energy, the joint between the two will cool and partially or fully solidify very quickly. In any event, the strength of the joint so formed will be quite capable of withstanding later downstream handling stresses.

As further shown by Figures 10 and 11, system 410 additionally includes perforating wheel 450. Perforating wheel 450 comprises a disk having a plurality of rows of pins, spines or teeth 452 extending from the outer circumferential surface of wheel 450. Each of the pins 452 has a length sufficient so as to pierce the roller cover being continuously formed by system 410. In the exemplary embodiment, each pin 452 is heated by a heat source such as an integral thermocouple element. Although less desirable, wheel 450 may omit the heating of pins 452. In yet another alternative embodiment, wheel 450 is provided with a plurality of rows of air nozzles interleaved between pins 452. The air nozzles are configured to direct a jet of air towards the roller cover to separate apart the pile fabric just prior to needles 452 piercing the backing of the pile fabric and the plies forming the core. Depending upon the length of pins 452, such pins may be staggered in height and may have various alternative patterns other than rows depending upon the desired perforation pattern in the roller cover being formed. Once the core stock is perforated, the stock material is divided (preferably by cutting or severing) into a plurality of roller covers having a commercially acceptable length.

As further shown by Figures 10 and 11, wheel 450 is rotatably supported adjacent to end 421 of mandrel 411 and is configured to be rotatably driven by a conventionally known rotational actuator. In the exemplary embodiment, wheel 450 rotates about the same helix as that of the helix drive belts 432 and 433. Because wheel 450 is rotatably driven and engages the roller cover stock adjacent to end 421 of mandrel 411, wheel 450 pierces the roller cover at the point of the roller cover most stably supported by mandrel 411. As a result, a perforated roller cover is readily produced without cover deformation. Moreover, because wheel 450 perforates the roller cover stock as the roller cover stock is continuously produced and prior to being divided into commercially acceptable lengths, such perforated roller covers may be produced in a continuous fashion, reducing processing times and handling costs.

Although perforation wheel 450 is illustrated in conjunction with system 410 wherein multiple plies of thermoplastic material are heat fused to one another to form the core in the noted fashion, the perforation wheel may alternatively be employed in any one of the conventionally know or future developed systems or apparatus for continuously producing a roller cover. For example, perforation wheel 450 may alternatively be employed in the systems described in U.S. Patents 5,195,242; 4,692,975; 5,468,207; pending U.S. Patent Application Serial No. 09/788,915 entitled "Apparatus and Method for Making Variable Paint Roller Covers", filed on February 19, 2001 by Bruce C. Polzin and Lawrence J. Bower, Jr.; and pending U.S. Patent Application Serial No. 09/766,110, entitled "Paint Applicator and Method of Manufacture Thereof', and filed on January 19, 2001, by Bruce C. Polzin, the full disclosures of which are hereby incorporated by reference. In a further alternative embodiment, where a backing material having a permeable stitching weave density is used, the perforation wheel 450 may be provided at an upstream location along mandrel 411 for perforating only the multi-ply core structure 427 prior to applying the pile fabric 444.

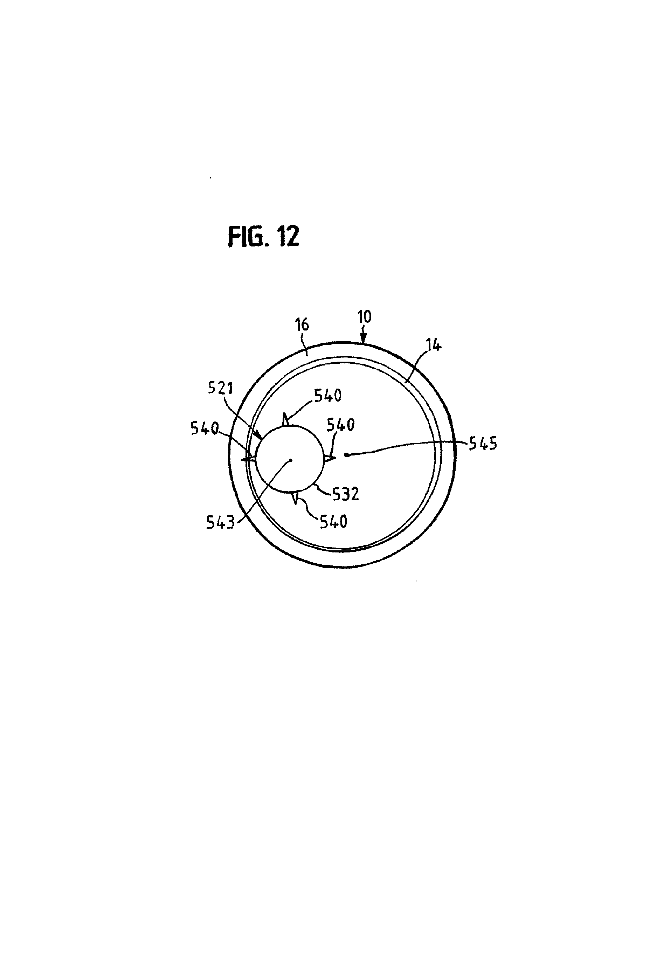

Figure 12 illustrates roller perforating device 521 configured to perforate roller cover 10. Perforating device 521 comprises a disk, rod or other configured member 532 having an outer circumferential surface from which a plurality of teeth, spines or pins 540 project. Disk 532 rotates about axis 543 as roller cover 10 rotates about axis 545. Each of teeth 540 has a length dimensioned so as to project through core 14 and through the backing of paint applying medium 16 as shown in Figure 12. In the exemplary embodiment, each of pins 540 is preferably heated to an elevated temperature above the melting point of the material forming core 14 and backing of medium 16. In alternative embodiments, the heating of pins 540 may be omitted, especially where device 521 is employed with roller covers having a core and backing formed from non-thermoplastic materials such as phenolic paperboard. In the exemplary embodiment, device 521 is positioned inside roller cover 10 beyond an end of the mandrel or other support structure supporting roller cover 10. Device 521 is rotatably driven by an independent rotating actuator and is preferably rotatably driven at a speed corresponding to the speed at which roller cover 10 rotates about axis 545. Alternatively, device 521 may be rotatably driven about axis 543 by means of roller cover 10 engaging pins 540 as roller cover 10 rotates about axis 545. In yet other alternative embodiments, device 521 may be similarly situated within the interior of a slotted mandrel supporting roller cover 10. As will be appreciated, the number of pins, their length and arrangements may be varied depending upon the desired characteristics of the roller cover 10 being perforated.

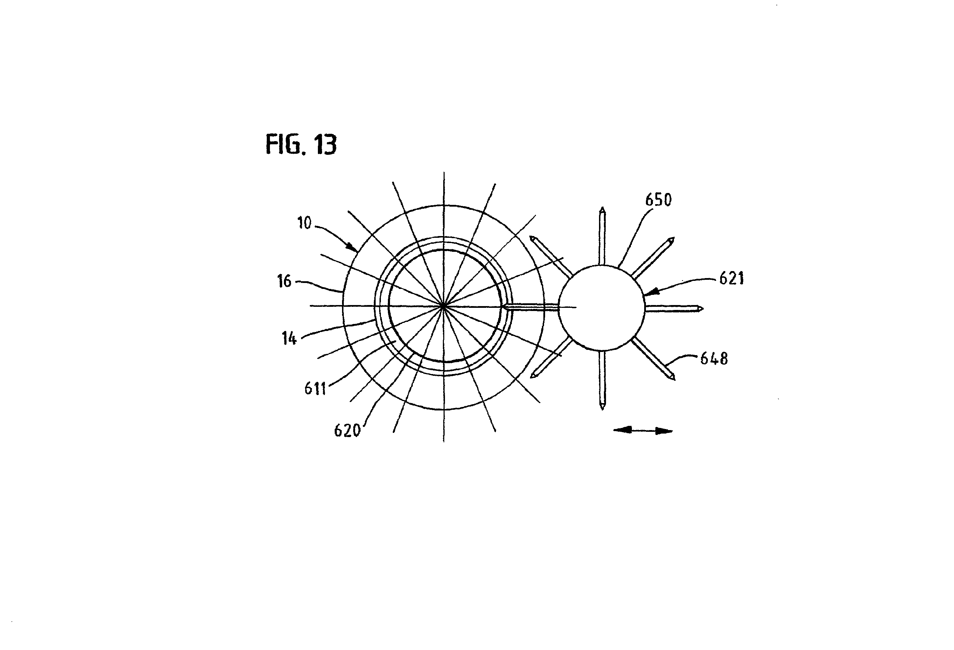

Figure 13 illustrates a roller perforating device 621 configured to perforate roller cover 10 according to an exemplary embodiment. Roller cover 10 may be in any suitable production length such as 64 inches, 58 inches, 37 seven inches or 36 inches and is preferably mounted on a mandrel 611 having a series of circumferential grooves 620 to accommodate the penetration of pins 648 through core 14. An elongated perforation rod, roller or wheel 650 having a length corresponding to roller cover 10 is aligned parallel to roller cover 10. Perforation rod 650 has a plurality of rows of pins 648 with a longitudinal spacing corresponding to the spacing between grooves 620. Pins 648 may have a straight shank with an end point as shown or may be tapered or conical. Perforation rod 650 is laterally shifted towards roller cover 10 so that pins 648 pierce backing material 16 and core 14. The pins 648 have a sufficient length, and the perforation rod 650 and roller cover 10 have an appropriate lateral spacing, so that rotation of perforation rod 650 will cause roller cover 10 to rotate in an opposite direction and bring an additional row of pins in contact with roller cover to produce another series of perforations. After one revolution of roller cover 10, perforation rod 650 (or roller cover 10) is retracted and the process repeated for additional roller covers. Alternatively, the perforation rod may be a non rotating device that actuates laterally between an extended perforating position, where the pins 648 pierce the backing material and core 14, and a retracted position, where the pins 648 are completely withdrawn from core and the pile fabric. After each perforating operation of the rod, the rod (or the mandrel 611) retracts and the mandrel 611 rotates the roller cover 10 a desired rotational increment to a subsequent perforating position, whereby the perforating process is repeated.

The above apparatus or systems and associated methods perforate roller covers preferably using heated cover piercing needles or pins and distinct flow nozzles. Alternatively, combined nozzles and needles or pins may be employed when the needle or pin directs the jet of air to separate the paint applying medium before being plunged through the paint roller cover to pierce the paint roller cover. In lieu of utilizing heated roller cover piercing pins or needles, other structures or processes may be employed to pierce the roller cover. For example, roller cover 10 may alternatively be pierced by means of water jets or lasers. Such methods may be performed from the outside, in similar to the method employed by apparatus 12, or from inside out, similar to the method employed by apparatus 112. The laser may direct the beam by means of reflecting mirrors or by means of fiber optics.

Each of the aforementioned apparatus perforates roller cover 10 after roller cover 10 has been substantially completed either in-line prior to being cut into roller cover lengths or off-line after being cut into roller cover lengths. Alternatively, each of the plies of material (plastic, vinyl, phenolic, acrylic, etc.) may be perforated prior to being wound and overlapped about the mandrel during the formation of the core of roller cover 10. Likewise, the fabric nap and its backing may also be perforated prior to the bonding otherwise adhering of the fabric nap or paint applying medium to the core. In such an alternative apparatus, the perforations should preferably be aligned with one another. Alternatively, each of the plies and the paint applying medium backing should have a sufficient number of perforations such that a sufficient number of the perforations at least partially overlap one another to provide a sufficient number of passageways completely through the core and the backing for allowing adequate paint flow to the paint applying medium. As will be appreciated, the location, required number and size of such perforations for the plies and the backing of the paint applying medium will vary depending upon the desired characteristics of the roller cover being perforated.

The features disclosed in the foregoing description, in the claims and/or in the accompanying drawings may, both separately and in any combination thereof, be material for realising the invention in diverse forms thereof.

## Claims

1. A method of manufacturing a perforated roller cover, the method comprising:
placing a roller cover having a core portion and an application medium on a support member;
positioning at least one perforating station proximate to the support member, the perforating station having at least one perforating device;
exposing the core portion at a first location; and
moving at least one of the roller cover and the perforating device relative to one another between a non-piercing position and a piercing position to pierce the core in the first location; and
removing the roller cover from the support member.

2. The method of Claim 1, wherein the support member is cylindrical and has at least one opening for receiving the perforating device in the piercing position.

3. The method of Claim 1, wherein the perforating station further includes a nozzle adapted to direct pressurized air at the application medium to create a separation in the application medium so as to expose the core portion.

4. The method of Claim 1, wherein the perforating device is a pin member.

5. The method of Claim 4, wherein the pin member is heated by a heat source.

6. The method of Claim 5, including heating the pin member to a temperature above a melting temperature of the core portion.

7. The method of Claim 1, further comprising moving the support member after piercing in the first location.

8. The method of Claim 7, further comprising rotating the support member after piercing in the first location.

9. The method of Claim 1, further comprising moving the perforating station after piercing in the first location.

10. The method of Claim 7, further comprising rotating the perforating station after piercing in the first location.

11. The method of Claim 1, further comprising the step of cutting the roller cover into commercial sized segments.

12. The method of Claim 1, wherein the perforating device is pneumatically actuated.

13. The method of Claim 1, including moving at least one of the roller cover and the perforating device relative to one another between the non-piercing position and the piercing position to pierce the core in a second location.

14. The method of Claim 1, including moving the perforating device relative to the roller cover between the non-piercing position and the piercing position.

15. A perforated roller cover manufactured according to the method of Claim 1.

16. An apparatus for piercing roller covers having an application medium adhered to a core, comprising:
at least one perforating station having at least one piercing device, at least one application medium separation device and a heat source;
a mandrel having a plurality of openings and adapted to support the roller cover; and
an actuator adapted to move the perforating station between a piercing position and a non-piercing position.

17. The apparatus of Claim 16, wherein the mandrel includes passageways adapted to receive a coolant.

18. The apparatus of Claim 16, wherein the application medium separation device includes a nozzle adapted to deliver a gas from a pressurized gas source to separate the application medium and create an exposed core portion.

19. The apparatus of Claim 18, wherein the piercing device pierces the core at the exposed core portion.

20. The apparatus of Claim 16, wherein the perforation device is a pin having a point.

21. The apparatus of Claim 20, wherein the pin has a length sufficient to pierce a near side and a far side of the core.

22. The apparatus of Claim 16, wherein the actuator is adapted to rotate the perforating station between an application medium separation position and a perforating position.

23. The apparatus of Claim 16, wherein the mandrel is adapted to rotate the roller cover for piercing in a first location and a second location.

24. The apparatus of Claim 16, wherein the heat source is adapted to heat the perforating device to a temperature greater than a melting temperature of the core.

25. A perforating apparatus for roller covers, comprising:
a support sleeve adapted to hold the roller cover;
a perforating station having at least one piercing device adapted to selectively engage the roller cover;
an actuator being further operable to move the piercing device between a first position and a second position adapted to pierce the roller cover in a first location;
the actuator being further operable to move the perforating station for piercing the roller cover in a second location.

26. The perforating apparatus of Claim 25, wherein the perforating station is positioned within the support sleeve.

27. The perforating apparatus of Claim 25, wherein the piercing device is extendable and retractable.

28. The perforating apparatus of Claim 25, wherein the perforating station is rotatable.

29. The perforating apparatus of Claim 25, wherein the actuator is pneumatically operated.

30. The perforating apparatus of Claim 25, wherein the support sleeve and the perforating station rotate in opposite directions in piercing engagement.

31. The perforating apparatus of Claim 30, wherein the perforating apparatus is an angular wheel having a plurality of rows of pins and a plurality of nozzles.

32. The perforating apparatus of Claim 25, wherein the perforating station is a roller having a plurality of outwardly projecting spines.

33. The perforating apparatus of Claim 25, wherein the piercing device is a water jet.

34. The perforating apparatus of Claim 25, wherein the piercing device is a laser.

35. An apparatus for piercing a roller cover, the apparatus comprising:
a support configured to support the cylindrical core; and
at least one piercing device disposed within an interior of the cylindrical core and configured to perforate the core.

36. The apparatus of claim 35, wherein the piercing device is heated to a temperature above a melting point temperature of the core.

37. The apparatus of claim 35, including an actuator configured to actuate the piercing device between a piercing position and a non-piercing position.

38. The apparatus of claim 35, wherein, the core extends along a first axis and the at least one piercing device rotates about a second axis offset from the first axis.

39. A method for manufacturing a plurality of perforated roller covers having a first axial length, the method comprising:
continuously forming an elongate roller cover stock having a second axial length greater than the first axial length, the roller cover stock including a core portion and an application medium;
perforating at least the core portion of the roller cover stock; and
dividing a perforated roller cover stock into a plurality of the first axial lengths.

40. The method of claim 39, including perforating the application medium to expose an area of the core portion, wherein the exposed area of the core portion is perforated.
